# EUROPEAN PATENT APPLICATION

(11) **EP 2 141 903 A1**
(43) Date of publication of application: **06.01.2010**
(21) Application number: 08722327.7
(22) Date of filing: 18.03.2008
(51) Int. Cl.: H04M 11/00, H04B 7/26, H04M 1/00, H04Q 7/34, H04Q 7/38

(54) **MOBILE TERMINAL WITH FUNCTION OF AUTOMATICALLY REPORTING POSITION**

(30) Priority: 22.03.2007 JP 2007074165
(71) Applicant: NEC Corporation, Minato-ku Tokyo 108-8001 (JP)
(72) Inventor: YASUTAKE, Hiroshi, Tokyo 108-8001 (JP)
(74) Representative: Glawe, Delfs, Moll
(86) International application number: PCT/JP2008/054933
(87) International publication number: WO 2008/114785

(57) **Abstract**

In a portable terminal with a position automatic informing function capable of showing a position information of itself to the other portable terminals, **characterized in that** information included in a received mail is collated with previously registered information and that a possibility of showing the position information is controlled based on a result of the collation. The portable terminal with a position automatic informing function is, if necessary, capable of informing a position of itself without troublesome while protecting privacy for a position of the portable terminal.

## Description

### TECHNICAL FIELD

The present invention relates to a portable terminal, in particular to a portable terminal with a position automatic informing function which has a function for informing a communication partner of a position of the portable terminal.

### BACKGROUND TECHNIQUE

Conventionally, a portable terminal such as a portable telephone, or the like has remarkably been spread. The portable terminal serves as a useful tool in a user's life.

The portable terminal is also used, for example, when B informs A that B wants A to come to pick B up and then A replies B whether or not A can go to pick B up.

In such a case, under the situation while B requesting the picking up is moving by train, bus, and the like and while A being requested thereof is moving on foot, or by bicycle, car, it was necessary for A to receive an electronic mail (hereunder simply referred to "a mail") from B informing that B wants A to come to pick B up and then to reply B whether or not A can go to pick B up by a mail or a communication.

In the interim, as a background technique for an electronic mail, Patent reference 1 discloses, as a countermeasure against unsolicited mails sent from partners who are not related to subscribers of the mail delivery system, an invention comprising a key extraction means for extracting the receiver's mail address and the key that corresponds to the receiver's mail address from a received mail, an authentication means for collating the pair of the receiver's mail address and the key extracted by the key extraction means, and a delivery control means for delivering the mail when the collation is fulfilled by the authentication means.

Patent reference 1: An official gazette of an unexamined Japanese patent publication 2007-28667

### DISCLOSURE OF THE INVENTION

### PROBLEM TO BE SOLVED BY THE INVENTION

As mentioned above, in a case that a mail requesting the picking up or replying to the request is sent using a portable terminal, the following problem is caused to occur.

For example, in a case that B requesting the picking up is moving by a public traffic means such as train, bus, and the like, it is presumed that a communication is not available. Consequently, although A who was requested with the picking up would reply by a mail, an operation for replying the mail is required every time A is requested with the picking up. This causes a problem that the operation is troublesome.

Further, A who was requested with the picking up may carry out an operation for replying to the request during moving on foot, by car or bicycle in order to shorten a time for going to pick up. This brings about a danger of a traffic accident, and the like.

Furthermore, when A who was requested with the picking up and B who requested the picking up wait for each other at a certain place and a certain time, it is necessary for both A and B to know the mutual moving statuses whether A and B may come in late or come in time. It therefore becomes necessary for both A and B to inform the mutual moving statuses to each other one by one using mails.

Under the circumstances, as a method other than a mail, it is considered that a position information of a portable terminal A of A who was requested with the picking up is obtained by GPS (Global Positioning System), and the like, and then the position information is shown to a portable terminal B of B who requested the picking up. Thereby, it is considered that the portable terminal B of B is capable of knowing the position of the portable terminal A of A. It is therefore considered that B can know whether or not A is coming to pick B up, responsive to whether or not A is approaching the wait place.

However, in a case of using such a constitution, the position of the portable terminal A of A is always shown to the portable terminal B of B unless A conducts change of setting of the portable terminal A, and the like. A problem on privacy is therefore caused to occur.

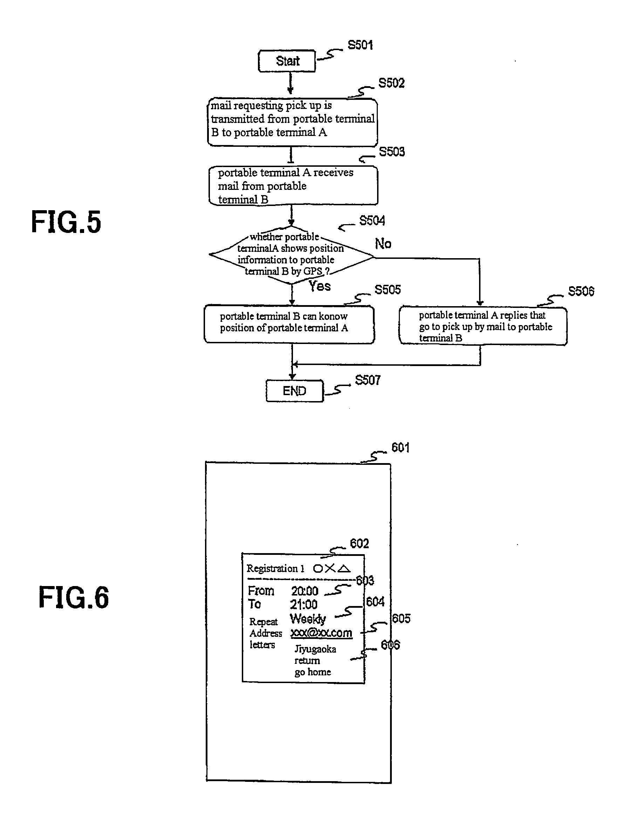

Further detailed description is made about such a conventional status with reference to Fig. 5.

Referring to Fig. 5, at first, a mail that B requests A to come to pick B up is transmitted from the portable terminal B owned by B to the portable terminal A owned by A (S501, S502).

The portable terminal A receives the mail from the portable terminal B (S503).

If the portable terminal A shows the position information of itself obtained by GPS (Global Positioning System), and the like, to the portable terminal B (S504), the portable terminal B can know the position of the portable terminal A (S505).

However, the position of the portable terminal A is always shown to B unless A conducts change of setting of the portable terminal A, and the like.

On the other hand, if the portable terminal A does not show the position information obtained by GPS, and the like (S504), it was necessary for A to replay B that A would go to pick B up by a mail or a communication (S506, S507).

At that time, in a case that B requesting the picking up is moving by a public traffic means such as train, bus, and the like, it is presumed that a communication is not available. A is therefore forced to reply by a mail. This causes a troublesome that an operation for replying by the mail is required every time A is requested with the picking up.

Further, A may carry out an operation for replying to the request during moving on foot, by car or bicycle in order to shorten a time for going to pick up. This brings about a danger of a traffic accident, and the like.

Besides, according to the invention disclosed in the above-mentioned Patent reference 1, judgment whether or not a received mail should be distributed is conducted in a mail server, dependent on whether or not a predetermined key is included in the received mail. However, the Patent reference 1 merely discloses a background technique for an electronic mail and does not come to solve the above-mentioned problem.

The present invention was made in view of the above-described points. Accordingly, it is an object of the present invention to provide a portable terminal with a position automatic informing function which is, if necessary, capable of informing a position of itself without troublesome while protecting privacy for a position of the portable terminal.

### MEANS FOR SOLVING THE PROBLEM

In solving the above-described problem, in order to show a position of a portable terminal with a limitation to a status under a particular condition, a portable terminal with a position automatic informing function of the present invention comprises: a registration means which is capable of registering a mail address, time and particular letters used in contents of the mail; an ON/OFF means which switches ON/OFF of showing a position information by GPS function, dependent on whether or not those are corresponding to conditions; and informing means which inform a terminal of a communication partner of the position information by a server.

Namely, according to the present invention, a portable terminal capable of showing a position information of itself to the other portable terminals is **characterized in that** information included in a received mail is collated with previously registered information and that a possibility of showing the position information is controlled based on a result of the collation.

Further, a portable terminal of the present invention is **characterized in that** information included in a received mail is collated with previously registered information, and then, if both information is collated with each other as a result of the collation, enabling the position information to be shown.

Furthermore, a portable terminal of the present invention is **characterized in that** information included in a received mail is collated with previously registered information, and then, if not only both information is collated with each other as a result of the collation but also it is during a previously registered service time, enabling the position information to be shown.

Moreover, according to the present invention, a portable terminal capable of showing a position information of itself to the other portable terminals is **characterized in that** information included in a received mail is collated with previously registered information and that a previously registered replay mail is transmitted based on a result of the collation.

Further, a portable terminal of the present invention is **characterized in that** information included in a received mail is collated with previously registered information, and then, if both information is collated with each other as a result of the collation, the replay mail is transmitted.

Furthermore, a portable terminal of the present invention is **characterized in that** information included in a received mail is collated with previously registered information, and then, if not only both information is collated with each other as a result of the collation but also it is during a previously registered service time, the replay mail is transmitted.

Moreover, a portable terminal of the present invention is **characterized in that** information used for the collation is, at least, a mail address of the received mail and particular letters used in the received mail.

### EFFECTS OF THE INVENTION

According to the present invention, the advantageous effects hereunder described will be produced.

According to the first advantageous effect of the present invention, when A who was requested with the picking up goes to pick up B who requested the picking up, it becomes possible for A to inform B whether or not A goes to pick up B without any operations of the portable terminal.

According to the second advantageous effect of the present invention, when A who was requested with the picking up goes to pick up B who requested the picking up, it becomes possible for A to inform B of a position of A himself without any operations of the portable terminal.

According to the third advantageous effect of the present invention, it becomes possible for A who was requested with the picking up to automatically show a position information of A himself only to a particular partner, only when the information included in the received mail is collated with particular time, partner, and contents of the mail.

According to the fourth advantageous effect of the present invention, in addition to the third advantageous effect, by previously registering a reply mail in a portable terminal A of A who goes to pick up, it becomes possible for A to transmit the replay mail to a portable terminal B requesting the picking up of B who asked the picking up without any operations of the portable terminal A, if the information included in the received mail is collated with conditions described in the third advantageous effect.

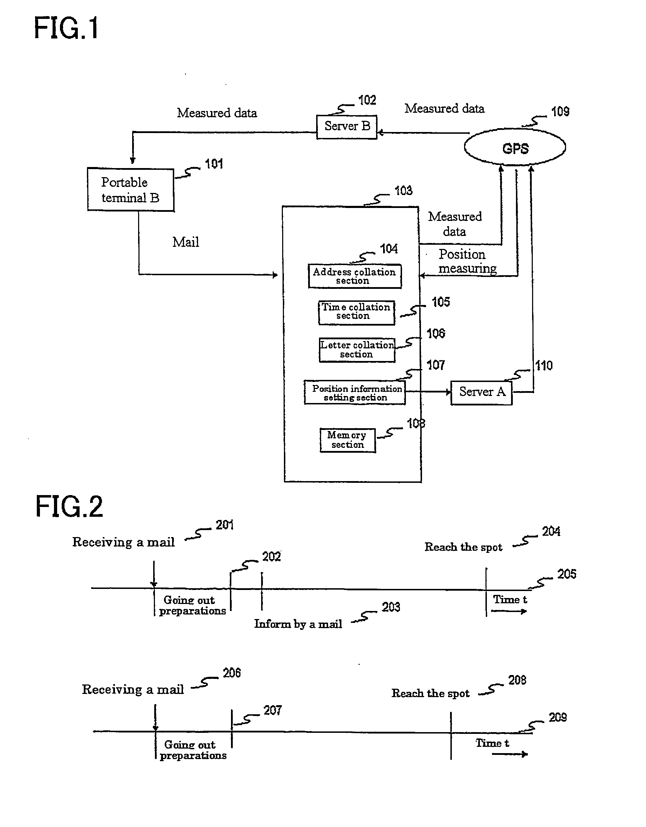

According to the fifth advantageous effect of the present invention, it becomes possible to shorten a time for going to pick up B who asked the picking up by the above first through fourth advantageous effects. About this advantageous effect, description will be made with reference to Fig. 2.

In Fig. 2, an advantageous effect for shortening a time is depicted.

In Fig. 2, an upper drawing is a conventional case while a lower drawing is a case by the present invention. Namely, 205 is a conventional time axis while 209 is a time axis in a case that a portable terminal with a position automatic informing function of the present invention is used.

Conventionally, as shown in the upper drawing of Fig. 2, upon receiving a mail (201), it was necessary to have a time for operating a portable terminal (203), such as a time for informing by a mail after the receiver had finished going out preparations (202). Thereafter, it becomes late as much as that to reach the spot, namely a wait place (204).

On the other hand, in a case that a portable terminal with a position automatic informing function of the present invention is used, as shown in the lower drawing of Fig. 2, upon receiving a mail (206), it is possible to go out immediately after the receiver had finished going out preparations (207). It therefore becomes sooner as much as that to reach the spot, namely a wait place (208).

Further, according to the sixth advantageous effect of the present invention, it is not necessary, by the above first through fifth advantageous effects, for A who was requested with the picking up to conduct an operation of the portable terminal for replying B who requested the picking up that A would go to pick up B by a mail or communication during moving by car, by bicycle, or on foot in order to shorten a time for going to pick up B. Thereby, A can be prevented from suffering from a danger.

Furthermore, according to the seventh advantageous effect of the present invention, when A who was requested with the picking up and B who requested the picking up mutually go to a promised place at a promised time, it is possible for both A and B to understand the mutual moving statuses whether A and B may be in late or come in time by informing a moving status of himself automatically to a portable terminal of a partner at a voluntarily predetermined frequency.

### BRIEF DESCRIPTION OF THE DRAWINGS

[Fig.1] A block diagram for showing a basic constitution of the present invention.
[Fig.2] A view for showing a difference between the present invention and a conventional technique by each time axis.
[Fig.3] A view for showing a flow chart of a first embodiment of the present invention.
[Fig.4] A view for showing a flow chart of a second embodiment of the present invention.
[Fig.5] A view for showing a flow chart of the conventional technique.
[Fig.6] A view for showing an example of a setting registration screen of the present invention.
[Fig.7] A view for showing an example of a position information display screen of the present invention.
[Fig.8] A view for showing a flow chart of a third embodiment of the present invention.

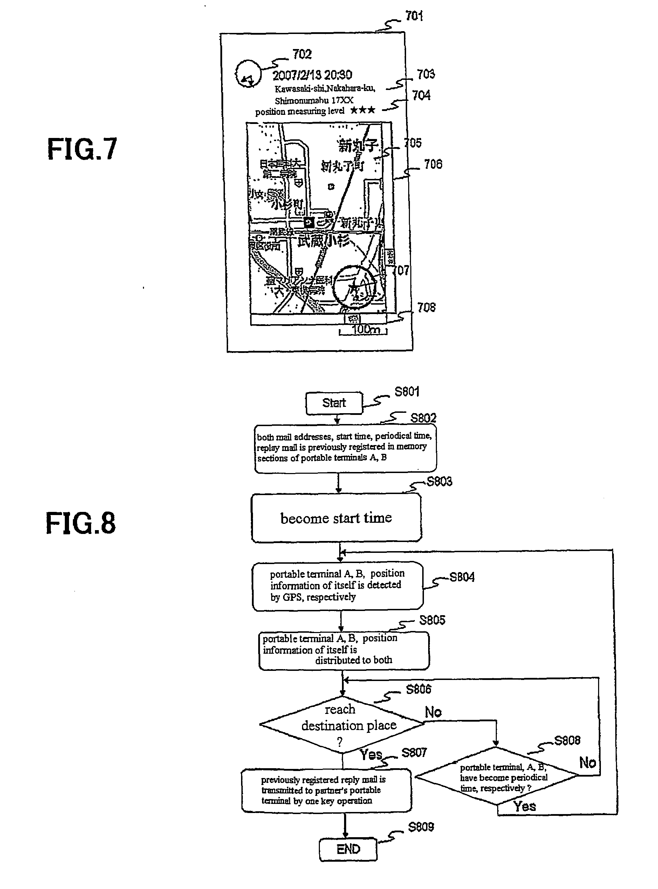

[Fig.8] A view for showing an operation of the third embodiment of the present invention in a time axis thereof.

### DESCRIPTION OF REFERENCE NUMERALS

- 10: user terminal
- 101: portable terminal B
- 102: server A
- 103: portable terminal A
- 104: address collation section
- 105: time collation section
- 106: letter collation section
- 107: position information setting section
- 108: memory section
- 109: GPS
- 110: server A
- 201: mail receiving point
- 202: going out preparations finishing point
- 203: mail replying operation time
- 204: the spot reaching point
- 205: a time axis of a conventional technique
- 206: mail receiving point
- 207: going out preparations finishing point
- 208: the spot reaching point
- 209: a time axis of the present invention
- 601: registration screen of a portable terminal
- 602: registrant name setting section
- 603: effective time setting section
- 604: frequency setting section
- 605: address setting section
- 606: letter setting section
- 701: position information display screen of a portable terminal
- 702: time display section
- 703: partner's portable terminal position display section
- 704: position measuring level
- 705: map display section
- 706: vertical scroll bar section
- 707: partner's portable terminal position
- 708: horizontal scroll bar section
- 901: portable terminal A
- 902: portable terminal B
- 903: starting time A
- 904: GPS position measuring portable terminal A itself
- 905: position information being automatically transmitted by mail
- 906: GPS position measuring and position information transmitting by mail are conducted every A minute
- 907: reaching the spot
- 908: transmitting a reach mail by one key operation
- 909: X place, XX month, XX day, XX hour, XX minute

### BEST MODE FOR CARRYING OUT THE INVENTION

Hereunder, detailed description will be made about embodiments of the present invention with reference to the drawings.

At first, referring to Fig.1, description is made as regards a basic constitution of a portable terminal with a position automatic informing function of the present invention.

Fig.1 is a block diagram for showing a constitution of a system using the portable terminal with a position automatic informing function of the present invention.

Referring to Fig. 1, the system comprises a portable terminal B 101 owned by B who requested the picking up, a server B 102 which provides the portable terminal B 101 with services, such as position information, mails, and the like, a portable terminal A 103 which is a portable terminal with a position automatic informing function of the present invention and owned by A who was requested with the picking up, GPS 109, and a server A 110 which provides the portable terminal A 103 with services, such as position information, mails, and the like.

Further, the portable terminal A 103 comprises a memory section 108 in which mail addresses, mail receiving time, and particular letters used in a mail, namely, operable conditions of the present invention have been previously registered, an address collation section 104 which collates an address of a received mail with addresses registered in the memory section 108, a time collation section 105 which collates a mail received time with an operable time registered in the memory section 108, a letter collation section 106 which collates whether or not particular letters previously registered in the memory section 108 are included in the received mail, and a position information setting section 107 which sets whether or not a position of the portable terminal A 103 should be informed to GPS.

Next, description is made about an operation of this embodiment.

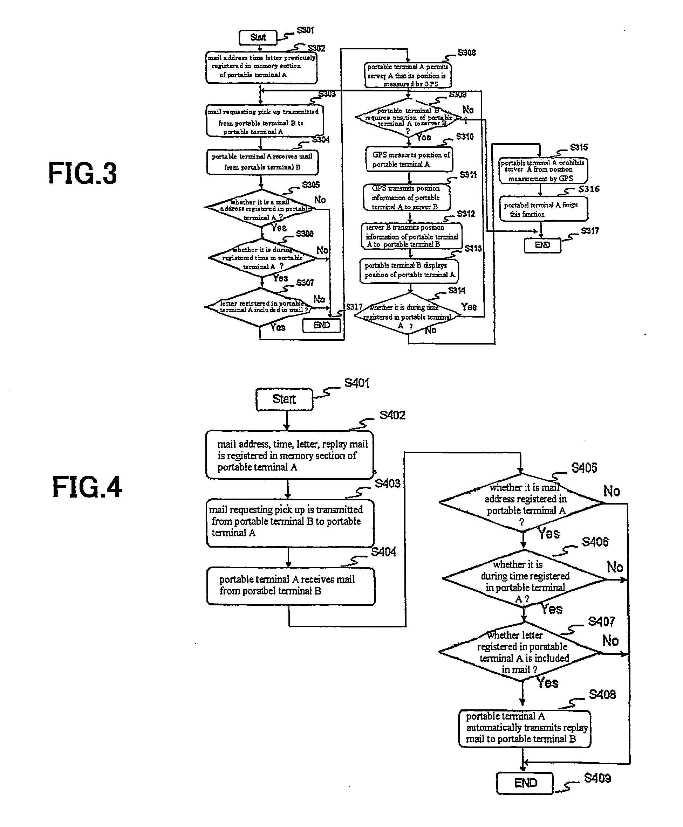

Fig.3 is a flow chart for showing an operation of a portable terminal with a position automatic informing function according to an embodiment of the present invention.

At first, a mail address of the portable terminal B 101 owned by B who will request the picking up, a particular letter supposed to be used in a mail, a service time, that is, a time for providing a service, and the like have previously been registered in the memory section 108 of the portable terminal A 103 owned by A who will be requested with the picking up (S301, S302).

By the portable terminal B 101 owned by himself, B who requests the picking up transmits a mail that he would like A to come to pick up B to the portable terminal A 103 (S303).

The portable terminal A 103 receives the mail from the portable terminal B 101 (S304).

The portable terminal A 103 collates (S305) whether or not a transmitter mail address of the received mail is corresponding with the addresses that have previously been registered at the step (S302).

If No, the portable terminal A 103 automatically conducts no operation.

If collated, the portable terminal A 103, next, collates (S306) a time that received the mail with the service time that have previously been registered at the step (S302).

If No, the portable terminal A 103 automatically conducts no operation.

If the mail received time is during the registered service time, the portable terminal A 103, next, collates (S307) whether or not the letter that has previously been registered at the step (S302) is included in the text of the received mail.

If No, the portable terminal A 103 automatically conducts no operation.

If collated, the portable terminal A 103 permits the server A 110 that a position of the portable terminal A 103 is measured by GPS 109 (S308).

Next, if the portable terminal B 101 requires a position of the portable terminal A 103, the position of the portable terminal A 103 is measured by GPS 109 (S310) through the server B 102 (S309). GPS 109 then transmits the measured data to the server B 102 (S311). The server B 102 then transmits the position information of the portable terminal A 103 to the portable terminal B 101 (S312).

If No at the step (S309), the position information of the portable terminal A 103 is not transmitted to the portable terminal B 101.

The portable terminal B 101 which received the position information of the portable terminal A 103 at the step (S312) displays the position information of the portable terminal A 103 on a screen of the portable terminal B 101 (S313).

Continuously, B who requested the picking up has a possibility to send a mail again to A who was requested with the picking up.

The service of the present invention is repeatedly effective, if sending the mail again is during the service time that has previously set at the step (S302).

If the service time that has previously set at the step (S302) has passed and the sending the mail again becomes overtime, the portable terminal A 103 transmits, to the server A 110, that the position of the portable terminal A 103 is prohibited from being measured by GPS 109 or that the position information of the portable terminal A 103 is prohibited from being transmitted to the portable terminal B 101 (S315). The service is then finished (S316).

Fig. 6 is a view for showing an example of a setting screen by which the mail address, the particular letter, and the service time are previously registered in the portable terminal A 103 at the step (S302) in Fig. 3.

A registrant name setting section 602 is provided in a registration screen 601 of the portable terminal A 103, thereby enabling several kinds of setting to be registered by different registrant names. Herein, registration 1 is set as an example.

At the step (S302) in Fig. 3, the service available time of the present invention can be set, as mentioned above. A service start time (From) and a service end time (To) can be input in a effective time setting section 603.

Further, a frequency whether every day, every one week, or every one year can also be registered in a frequency setting section 604.

Further, a mail address of a partner who is permitted to obtain the service is input in an address setting section 605.

Next, letters that are supposed to be included in a mail requesting the picking up from the partner that the service is permitted or letters previously determined with the partner are input in a letter setting section 606.

The portable terminal A 103 registers these inputs in the memory section 108 at the step (S302) in Fig. 3.

For example, if the letters input in the letter setting section 606 and registered therein are collated with letters included in the contents of the mail from B who requested the picking up, that is, "I will go home, please come to the station to pick me up, now, I am in Jiyugaoka, I will soon arrive at Musashikosugi.", the above-mentioned operation is conducted.

By registering a plurality of the collated letters, it may be possible to select whether the service is permitted by OR of those or the service is permitted by AND of those.

Besides, in this embodiment, when the position information of the portable terminal A 103 is informed to the portable terminal B 101, the position of the portable terminal A 103 is measured by GPS 109. GPS 109 then transmits the measured result to the server B 102. The server B 102 then converts the measured result into an actual geographical position information.

Herein, an operation for converting the measured result into the position information may be conducted by another constitution. For example, it is possible to employ the following means. A position of the portable terminal A 103 is measured by GPS 109. The measured result is then transmitted from GPS 109 to the portable terminal A 103 through the server A 110. In the portable terminal A 103, the measured result is converted into the geographical position information. The geographical position information is transmitted to the server A 110 and is informed to the portable terminal B 101 through the server B 102.

Namely, in the present invention, a place where the operation for converting the measured result by GPS 109 into the position information is conducted is not limited. Further, a route for treating the measured result by GPS 109 or the position information converted from the measured result is also not limited in the present invention.

Fig. 7 is a view for showing an example of a position information display screen displayed in the portable terminal B 101 in which the position of the portable terminal A 103 is indicated.

In a display screen 701 of the portable terminal B 101, a time when received the position information displayed at the present is displayed in a time display section 702. The address of the present position of the portable terminal A 103 by the position information displayed at the present is displayed in an address display section 703. The position measuring level of the position information displayed at the present is displayed in a position measuring level display section 704. The map around the present position of the portable terminal A 103 by the position information displayed at the present is displayed in a map display section 705.

The contents of display in the map display section 705 can be scrolled by a vertical scroll bar 706 and a horizontal scroll bar 708. Further, the present position of the portable terminal A 103 is indicated by a present position mark 707 in the map display section 705.

Next, referring to Fig.4, description is made as regards a portable terminal with a position automatic informing function according to a second embodiment of the present invention.

Fig. 4 is a flow chart for showing operations of the portable terminal with a position automatic informing function according to the second embodiment of the present invention.

At first, a mail address of the portable terminal B 101 owned by B who will request the picking up, a particular letter supposed to be used in a mail, a service time, that is, a time for providing a service, a replay mail to B describing that A would go to pick up B, and the like have previously been registered in the memory section 108 of the portable terminal A 103 owned by A who will be requested with the picking up (S401, S402).

By the portable terminal B 101 owned by himself, B who requests the picking up transmits a mail that he would like A to come to pick up B to the portable terminal A 103 (S403).

The portable terminal A 103 receives the mail from the portable terminal B 101 (S5404).

The portable terminal A 103 collates (S405) whether or not a transmitter mail address of the received mail is corresponding with the addresses that have previously been registered at the step (S402).

If No, the portable terminal A 103 automatically conducts no operation.

If collated, the portable terminal A 103, next, collates (S406) a time that received the mail with the service time that have previously been registered at the step (S402).

If No, the portable terminal A 103 automatically conducts no operation.

If the mail received time is during the registered service time, the portable terminal A 103, next, collates (S407) whether or not the letter that has previously been registered at the step (S402) is included in the text of the received mail.

If No, the portable terminal A 103 automatically conducts no operation.

If collated, the portable terminal A 103 automatically transmits the reply mail that has previously been registered at the step (S402) to the portable terminal B 101 (S408).

Besides, as the reply mail, a mail describing that A has arrived at a promised place, a mail describing that A has reached near the promised place but cannot reach the promised place due to any circumstances, and the like may be registered. Those mails may be transmitted to a partner together with his own position information by each one operation of respective keys.

Further, description is made as regards a third embodiment of the present invention.

This embodiment is a service that A and B can confirm statuses for completing the waiting for each other by both A and B periodically informing his own position information to each other by a mail, when A and B wait for each other at X place on XX month, XX day, XX hour, XX minute. In this case, both the portable terminal A 103 and the portable terminal B 101 have functions similar to each other.

Referring to Fig. 8, description is made as regards this third embodiment of the present invention.

Fig. 8 is a flow chart for showing operations of the portable terminal with a position automatic informing function according to the third embodiment of the present invention.

In both the portable terminal A 103 and the portable terminal B 101, a mail address of a partner, a start time of this service, a periodical time that a position information of himself is measured by GPS 109 and the measured position information is periodically transmitted by a mail to the partner's portable terminal, a mail informing by one key operation that he has arrived at a promised place, a mail describing that he has reached near the promised place but cannot reach the promised place due to some kinds of circumstances, such as a car parking and the like, are previously prepared and registered in each memory section of both the portable terminal A 103 and the portable terminal B 101 (S802).

Then, the start time of service has come. This start time of service is voluntarily determined by each of the portable terminal A 103 and the portable terminal B 101 and therefore is not required to be the same each other in both the portable terminal A 103 and the portable terminal B 101 (S803).

Next, the portable terminal A 103, the portable terminal B 101 detects a position information of itself by GPS 109, respectively (S804).

Then, the portable terminal A 103, the portable terminal B 101 transmits (S805) the position information of itself detected at the step (S804) by a mail every periodical time (S808) previously determined at the step (S802), to the portable terminal B 101, the portable terminal A 103, respectively.

Behavior of the step (S805) is repeatedly conducted every previously determined time, which can be voluntarily determined by each of the portable terminal A 103 and the portable terminal B 101.

Thereafter, when A, B arrives at a meeting place previously promised between A and B (S806), the mail previously registered at the step (S802) informing that he has arrived at the place is transmitted by operating one optional key 1 (S807). Alternatively, when he has reached near the destination place but cannot reach the promised place due to the circumstances, the mail previously registered at the step (S802) informing thus is transmitted by operating one optional key 2 (S807).

By carrying out the step (S807), a service that a position of itself is detected by GPS 109 and transmitted by a mail is finished. He only receives a mail including a position information of a partner (S809).

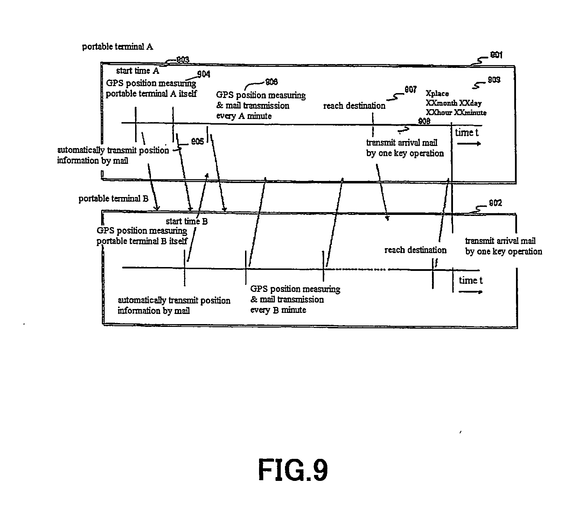

Next, description is made using a time axis with reference to Fig. 9.

Fig. 9 is a time flow for showing operations of the portable terminal with a position automatic informing function according to the third embodiment of the present invention.

In Fig. 9, 901 shows operations in the portable terminal A 103 while 902 shows operations in the portable terminal B 101.

The start time A 903 can be voluntarily determined and is not required to be the same as the start time B. The portable terminal A 103 makes a position information of itself be measured by GPS 109 (904) and transmits the position information to the portable terminal B 101 by a mail (905). Behaviors of the steps 904 and 905 are repeatedly conducted every previously determined time, which can be voluntarily determined by each of the portable terminal A 103 and the portable terminal B 101 (906).

Thereafter, when A, B arrives at a place previously promised between A and B (907), the mail previously registered is transmitted to a partner by operating one optional key 1.
Alternatively, when he has reached near the destination place but cannot reach the promised place due to the circumstances, the mail previously registered informing thus is transmitted to a partner by operating one optional key 2 (908). 909 indicates a place and a time previously promised between A and B.

Besides, the present invention may have another constitution that makes a position information of itself be measured by GPS, and the like and continuously transmits the position information to a voluntary partner by a mail at a voluntary frequency from a previously registered time.

## Claims

1. A portable terminal with a position automatic informing function capable of showing a position information of itself to the other portable terminals, **characterized in that** information included in a received mail is collated with previously registered information and that a possibility of showing the position information is controlled based on a result of the collation.

2. A portable terminal with a position automatic informing function as claimed in claim 1, **characterized in that** information included in a received mail is collated with previously registered information, and then, if both information is collated with each other as a result of the collation, enabling the position information to be shown.

3. A portable terminal with a position automatic informing function as claimed in claim 1, **characterized in that** information included in a received mail is collated with previously registered information, and then, if not only both information is collated with each other as a result of the collation but also it is during a previously registered service time, enabling the position information to be shown.

4. A portable terminal with a position automatic informing function capable of showing a position information of itself to the other portable terminals, **characterized in that** information included in a received mail is collated with previously registered information and that a previously registered replay mail is transmitted based on a result of the collation.

5. A portable terminal with a position automatic informing function as claimed in claim 4, **characterized in that** information included in a received mail is collated with previously registered information, and then, if both information is collated with each other as a result of the collation, the replay mail is transmitted.

6. A portable terminal with a position automatic informing function as claimed in claim 4, **characterized in that** information included in a received mail is collated with previously registered information, and then, if not only both information is collated with each other as a result of the collation but also it is during a previously registered service time, the replay mail is transmitted.

7. A portable terminal with a position automatic informing function as claimed in claim 1, **characterized in that** information used for the collation is, at least, a mail address of the received mail and particular letters used in the received mail.
